Europäisches Patentamt

European Patent Office

Office européen des brevets

(19)

(11) Publication number: **0 158 492 B1**

# EUROPEAN PATENT SPECIFICATION

(45) Date of publication of patent specification: **16.10.91**   (51) Int. Cl.⁵: **H04N 3/233**

(21) Application number: **85302232.5**

(22) Date of filing: **29.03.85**

(54) **Line deflection circuit with raster distortion correction.**

(30) Priority: **04.04.84 GB 8408692**
       **21.12.84 US 685242**

(43) Date of publication of application:
**16.10.85 Bulletin 85/42**

(45) Publication of the grant of the patent:
**16.10.91 Bulletin 91/42**

(84) Designated Contracting States:
**AT DE FR GB IT SE**

(56) References cited:
**GB-A- 2 081 530**
**GB-A- 2 086 683**

(73) Proprietor: **RCA LICENSING CORPORATION**
**2 Independence Way**
**Princeton New Jersey 08540(US)**

(72) Inventor: **Haferl, Peter Eduard**
**Feldblumenstrasse 20**
**CH-8134 Adliswil(CH)**

(74) Representative: **Smith, Thomas Ian Macdonald**
**et al**
**RCA International Limited Burdett House**
**15-16 Buckingham Street**
**London WC2N 6DU(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to line (usually horizontal) deflection circuits with raster distortion correction.

An east-west pincushion raster distortion corrected horizontal deflection circuit is described in U.S. Patent US-A-4,429,257, by P.E. Haferl, entitled VARIABLE HORIZONTAL DEFLECTION CIRCUIT CAPABLE OF PROVIDING EAST-WEST PINCUSHION CORRECTION. In the disclosed circuitry, the flyback transformer winding and the horizontal deflection winding each form separate retrace resonant circuits isolated from one another. This arrangement avoids undesirable interaction between the retrace-loaded resonant circuit of the flyback transformer and the retrace resonant circuit of the deflection winding. A source of pincushion correction current is coupled to the deflection winding via a choke impedance.

In the circuitry disclosed in the Haferl patent, only one of the flyback transformer and deflection retrace resonant circuits is grounded, while the other resonant circuit is left floating above ground during retrace. A retrace pulse voltage is used to provide synchronization information to the horizontal oscillator. If the deflection retrace resonant circuit is grounded, such retrace pulse synchronization information is readily available from the deflection retrace capacitance network. The flyback transformer retrace resonant circuit however, is left floating during retrace, potentially requiring additional circuitry to disconnect the flyback transformer from the B+ voltage supply during retrace.

In an alternative arrangement, the flyback transformer retrace resonant circuit is grounded and the deflection retrace resonant circuit is left floating. In such an arrangement, retrace pulse synchronization information is more readily obtainable from a secondary winding of the flyback transformer than from the deflection retrace resonant circuit. However, since the two retrace resonant circuits are decoupled from one another, the synchronization information contained in the flyback transformer retrace pulse voltage may not correspond exactly to the desired synchronization information contained in the deflection retrace pulse voltage.

In U.S. Patent Application Serial No. 651,301, filed September 17, 1984, by P.E. Haferl, entitled, EAST-WEST CORRECTION CIRCUIT * , both a flyback transformer and a deflection retrace resonant circuit are provided, with the deflection retrace resonant circuit left floating during retrace. Synchronization information for the horizontal oscillator is provided from a secondary winding of the flyback transformer. The flyback transformer input winding and the deflection retrace resonant circuit are coupled together by a relatively small valued retrace capacitor during the retrace interval to enable relatively accurate deflection synchronization information to be obtained from a flyback transformer retrace pulse voltage. The value of this retrace capacitor is chosen so as to minimize transient distortion of the deflection retrace pulse voltage that may be caused by sudden high voltage loading changes.

Another Form of deflection circuit, as disclosed in GB-A-2086683, also includes two resonant circuits which are coupled together at all times through a transformer between them.

A deflection circuit in accordance with the present invention as set forth in the appended claims also includes two resonant circuits but they are decoupled from each other during retrace, thereby to minimize interaction between them, by the switching means which generate the line deflection current in the deflection winding. Advantageously neither of the two resonant circuits is placed in a floating condition during retrace.

In the accompanying drawings:

FIGURE 1 illustrates a raster distortion corrected horizontal deflection circuit, embodying the invention; and

FIGURE 2 illustrates still another raster distortion corrected horizontal deflection circuit, embodying the invention.

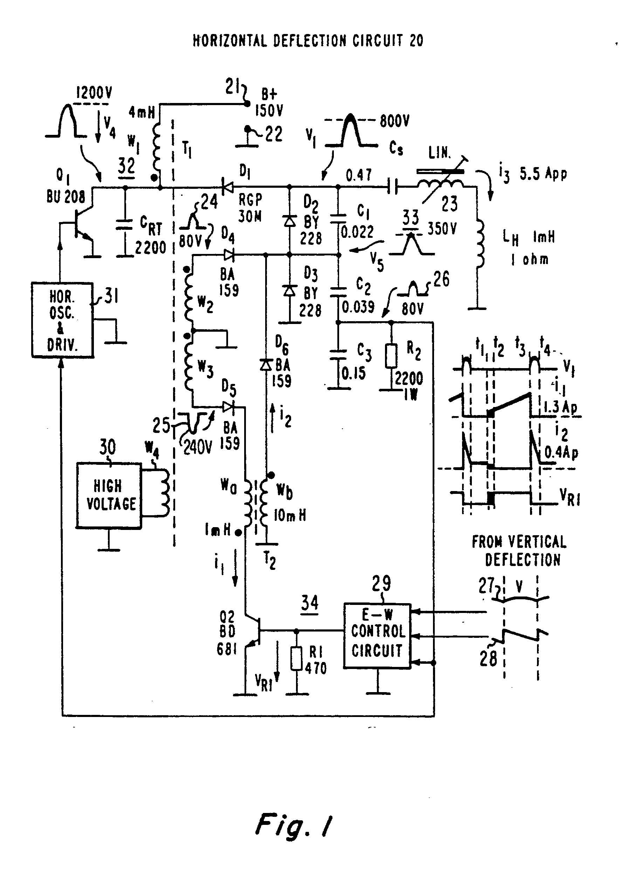

In raster distortion corrected horizontal deflection circuit 20 of FIGURE 1, source of B+ supply voltage and energy is coupled between a terminal 21 and a point of reference potential, ground terminal 22. Terminal 21 is coupled to an input inductance, the primary winding $W_1$ of a flyback transformer $T_1$. The lower end terminal of primary winding $W_1$ is coupled to the collector of a horizontal output transistor $Q_1$ of a horizontal switching means comprising horizontal output transistor $Q_1$, series connected damper diodes $D_2$ and $D_3$, and a disconnect diode $D_1$.

Coupled between the cathode of damper diode $D_2$ and ground is the series arrangement of an S-shaping capacitor $C_s$, a magnetically biased linearity correction coil 23 and a horizontal deflection winding $L_H$. Also coupled between the cathode of damper diode $D_2$ and ground is the series connected retrace capacitance network of retrace ca-

*Applications corresponding to the aforementioned U.S. application no. 651,301 are:
France 8417816    Germany P 34 42 819.4
Italy 23637 A/84    Sweden 8405769-4
Great Britain 8429413.

pacitors $C_1$, $C_2$ and $C_3$.

A horizontal oscillator and driver circuit 31 provides horizontal rate switching signals to the base of horizontal output transistor $Q_1$. Operation of horizontal output transistor $Q_1$ enables current to flow in a primary winding $W_1$ and horizontal scanning current $i_3$ to flow in horizontal deflection winding $L_H$. During the early portion of the horizontal trace interval, damper diodes $D_2$ and $D_3$ conduct horizontal scanning current $i_3$ and conduct current in flyback transformer winding $W_1$ via diode $D_1$. During the latter portion of the horizontal trace interval, horizontal output transistor $Q_1$ conducts current from flyback transformer winding $W_1$ and horizontal scanning current via diode $D_1$.

When horizontal output transistor $Q_1$ becomes non-conductive to initiate the horizontal retrace interval, two retrace resonant circuits are formed. A first retrace resonant circuit 33 is formed by horizontal deflection winding $L_H$ and retrace capacitance network $C_1$ -$C_3$. This retrace resonant circuit generates a retrace pulse voltage across deflection winding $L_H$ and a retrace pulse voltage $V_1$ at the anode of diode $D_1$, across retrace capacitance network $C_1$ - $C_3$.

A second retrace resonant circuit 32 is formed by the input inductance of flyback transformer primary winding $W_1$ and a flyback transformer retrace capacitance $C_{RT}$ coupled between winding $W_1$ and ground. A retrace pulse voltage $V_4$ is developed by flyback transformer retrace resonant circuit 32 across retrace capacitance $C_{RT}$ at the cathode of diode $D_1$.

The amplitude of flyback transformer retrace pulse voltage $V_4$ is greater than the amplitude of deflection retrace pulse voltage $V_1$, thereby reverse biasing diode $D_1$. In this way, diode $D_1$ serves to disconnect or decouple the two retrace resonant circuits 32 and 33 from each other during the retrace interval so that no current flows from flyback transformer winding $W_1$ to deflection retrace resonant circuit 33.

During the horizontal trace interval, energy from the B + supply source is stored in the input inductance of flyback transformer primary winding $W_1$. This energy is transferred to the flyback transformer retrace resonant circuit 32. The energy replenishes losses sustained in driving the retrace driven load circuits coupled to various ones of the secondary windings of the flyback transformer, such as high voltage circuit 30 coupled to high voltage winding $W_4$.

Beam current loading of flyback transformer retrace resonant circuit 32 by high voltage circuit 30 produces a harmonically distorted retrace pulse voltage $V_4$. Because deflection retrace resonant circuit 33 is decoupled from flyback transformer retrace resonant circuit 32 by means of disconnect

diode $D_1$, variations in beam current loading or other loading of flyback transformer $T_1$, such as audio loading, produce no significant distortion of the deflection retrace pulse voltage $V_1$ and the retrace pulse voltage across horizontal deflection winding $L_H$.

A raster distortion correction circuit 34 provides a source of correction current $i_2$ to deflection winding $L_H$ via a diode $D_6$. In addition to providing raster distortion correction such as east-west pincushion correction, current $i_2$ provides the drive power to replenish horizontal deflection losses.

In correction circuit 34, a vertical or field rate parabolic waveform correction signal 27, obtained from the vertical deflection circuit, not illustrated, is coupled to a conventional pulse width modulator east-west control circuit 29. A field rate sawtooth waveform signal 28 provides trapeze distortion correction to control circuit 29. The pulse width modulation is performed on a horizontal rate signal that is synchronized with horizontal deflection by a deflection retrace pulse voltage 26 coupled to the junction of deflection retrace capacitors $C_2$ and $C_3$. The pulse width modulated base drive voltage for a driver transistor $Q_2$, developed by east-west control circuit 29 is illustrated in FIGURE 1 by the voltage waveform $V_{R1}$.

To obtain the current $i_2$, energy is stored in the inductance of an east-west pincushion transformer $T_2$ by the current $i_1$ flowing in a winding $W_a$ of the transformer during conduction of east-west pincushion driver transistor $Q_2$.

The energy or supply voltage source for transformer $T_2$ is secondary winding $W_3$ of flyback transformer $T_1$. During the latter portion of each horizontal trace interval, transistor $Q_2$ is conductive, producing an upwardly ramping current $i_1$ in winding $W_a$, as noted from waveforms $V_1$, $i_1$, and $V_{R1}$ illustrated in FIGURE 1. At the beginning of each horizontal retrace interval, transistor $Q_2$ is made non-conductive by the base drive voltage $V_{R1}$. The reverse biasing of diode $D_5$ is aided by the negative retrace pulse voltage 25 developed at the anode of the diode by flyback transformer winding $W_3$.

With current in winding $W_a$ of transformer $T_2$ abruptly cutoff at the beginning of retrace, the dotted end of winding $W_b$ becomes positive and current $i_2$ is generated in winding $W_b$ by means of energy transfer between windings $W_a$ and $W_b$, as illustrated in FIGURE 1 by the current $i_2$ at time $t_3$. Current $i_2$ flows into first deflection retrace resonant circuit 33 at the junction of deflection retrace capacitors $C_1$ and $C_2$, to replenish deflection losses and to provide the needed east-west pincushion correction modulation of horizontal scanning current $i_3$. The amplitude of correction current $i_2$ at the beginning of horizontal retrace varies in an east-west manner to likewise vary the horizontal scanning current $i_3$ and the deflection retrace pulse voltage $V_1$.

Time $t_2$ of the waveforms of FIGURE 1 indicates the instant within each horizontal trace interval that transistor $Q_2$ becomes conductive when the top and bottom raster lines are being scanned, and time $t_1$ indicates the time when the center raster lines are being scanned. Advancing the position of the entire interval $t_1$ - $t_2$ to a point early within the horizontal trace interval, increases the peak value of correction current $i_2$. The amplitude of scanning current $i_3$ is thereby increased, resulting in increased raster width. A decrease in scanning current amplitude occurs when the position of the interval $t_1$ - $t_2$ is retarded.

The greater the amount of energy that is stored in pincushion transformer $T_2$ during each horizontal trace interval, the higher the resulting amplitudes of correction current $i_2$, deflection retrace pulse voltage $V_5$ developed at the junction of retrace capacitors $C_1$ and $C_2$, deflection retrace pulse voltage $V_1$, and scanning current $i_3$. It should be noted that correction current $i_2$ does not decrease to zero at time $t_4$, the end of the horizontal retrace interval. Thus after time $t_4$ and until driver transistor $Q_2$ becomes conductive, current $i_2$ circulates in winding $W_b$ via the ground connections provided by conduction of the appropriate one or both of damper diodes $D_2$ and $D_3$. Because correction current $i_2$ does not decrease to zero within the horizontal retrace interval, retrace time modulation of the deflection retrace pulse voltages is avoided. Such modulation could have been produced had diode $D_6$ become nonconductive during horizontal retrace.

During the startup phase of circuit operation, B + supply rail voltages for such circuits as horizontal oscillator and driver 31 and east-west control circuit 29 may be provided in a conventional manner, not illustrated in FIGURE 1. Upon startup of horizontal oscillator and driver 31, horizontal output transistor $Q_1$ begins its switching operation to generate flyback transformer retrace pulse voltages in the windings of flyback transformer $T_1$.

Because diode $D_1$ blocks power transfer to deflection retrace resonant circuit 33 from flyback transformer retrace resonant circuit 32, the switching operation of horizontal output transistor $Q_1$ cannot, by itself, initiate the development of deflection retrace pulse voltages and horizontal scanning current. Without the generation of deflection retrace pulse voltages, such as voltage 26, typical east-west control circuits that do not incorporate free running oscillators are unable to generate the horizontal rate switching voltage $V_{R1}$ required for driver transistor $Q_2$. Absent the switching of driver transistor $Q_2$, no energy can flow to deflection retrace resonant circuit 33 to initiate the buildup of deflection retrace pulse voltages and horizontal scanning current. A prior art solution in such a situation is to provide a source of startup current from a voltage supply such as a main rectified supply and inject the current into the current path of S-shaping capacitor $C_S$. Such an arrangement is shown in U.S. Patent 4,362,974, by W.F.W. Dietz, entitled, COMMUTATED SWITCHED REGULATOR WITH LINE ISOLATION FOR TRANSISTOR DEFLECTION.

In accordance with an inventive feature, horizontal deflection circuit 20 of FIGURE 1 avoids the need for a separate startup supply to transfer energy to deflection retrace resonant circuit 33. Even though flyback transformer $T_1$ does not transfer power to deflection winding $L_H$ during steady-state operation, it does advantageously transfer power during the startup interval. The retrace pulse voltage 24 developed by winding $W_2$ of flyback transformer $T_1$ is rectified by a diode $D_4$ and coupled to the junction of deflection retrace capacitors $C_1$ and $C_2$. Winding $W_2$ provides initial deflection power to generate the deflection retrace pulse voltage 26 for starting up east-west control circuit 29 and for providing initial synchronization information to horizontal oscillator and driver circuit 31. During steady-state operation the deflection retrace pulse voltage $V_5$ is of a greater amplitude than that of flyback transformer retrace voltage 24, thereby cutting off diode $D_4$ and disconnecting winding $W_2$ from deflection retrace resonant circuit 33.

Several advantages are provided by the inventive raster distortion corrected horizontal deflection circuit 20 of FIGURE 1. For example, the amplitude of horizontal scanning current $i_3$ becomes generally independent of B + voltage variations at terminal 21. The impedance of horizontal deflection winding $L_H$ need not be matched to the value of the B + voltage chosen at terminal 21. Beam current loading of flyback transformer $T_1$ does not produce scanning current disturbances known as "Mäusezähne",or mouseteeth wiggles that may otherwise be observed when displaying a white crosshatch line pattern. Because the scanning current amplitude is relatively independent of the B + voltage, a very large range of raster width adjustment is available.

Various modifications to the circuit of FIGURE 1 are possible. For example, the junction of diodes $D_6$ and $D_4$, instead of being connected to the junction of diodes $D_2$ and $D_3$ may be connected to the junction of diodes $D_1$ and $D_2$. Capacitor $C_2$ and diode $D_3$ may be omitted, with the anode of diode $D_2$ being grounded and the bottom plate of capacitor $C_1$ being connected directly to the top plate of capacitor $C_3$. The junction of diodes $D_4$ and $D_6$ would then be connected to the junction of diodes $D_1$ and $D_2$.

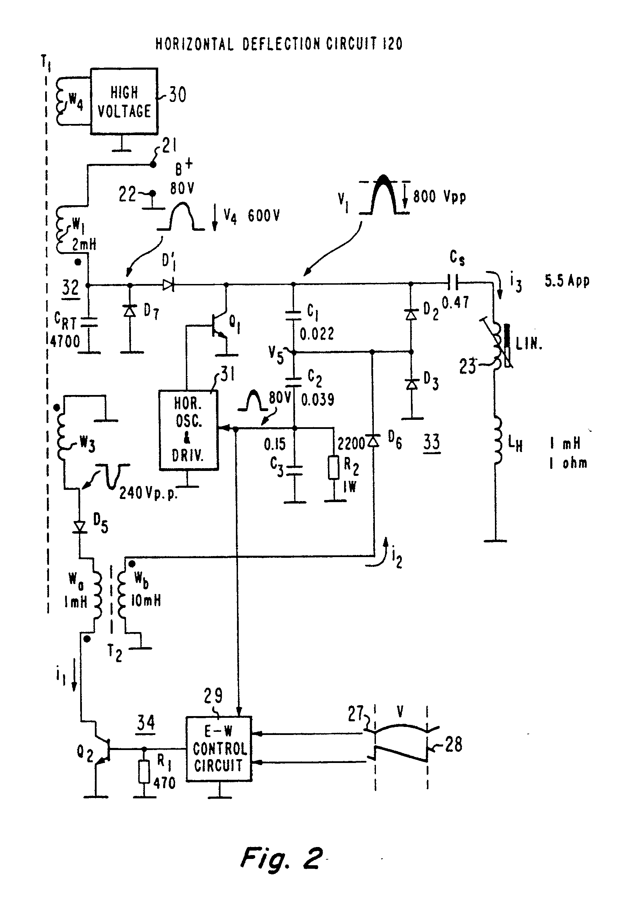

FIGURE 2 illustrates a raster distortion corrected horizontal deflection circuit 120 similar to the circuit of FIGURE 1. Circuit 120 may be advantageously used when the available B + voltage is lower than the average trace voltage applied to horizontal deflection winding $L_H$ and when yoke transformation is not desired. Items in FIGURES 1 and 2 similarly identified function similarly or represent similar quantities.

In FIGURE 2, horizontal output transistor $Q_1$ is directly connected to S-shaping capacitor $C_5$ and horizontal deflection winding $L_H$. Flyback transformer winding $W_1$ is coupled to horizontal output transistor $Q_1$ via disconnect diode $D'_1$. Diode $D'_1$ of FIGURE 2 is poled in the sense opposite that of corresponding diode $D_1$ of FIGURE 1.

To enable diode $D'_1$ to decouple flyback transformer retrace resonant circuit 32 from deflection retrace resonant circuit 33 during retrace, horizontal deflection circuit 120 is designed to produce a deflection retrace pulse voltage $V_1$ that is greater in amplitude than that of flyback transformer retrace pulse voltage $V_4$. This produces the required cutoff of diode $D'_1$ during retrace.

With flyback transformer retrace capacitor $C_{RT}$ being connected to the anode of diode $D'_1$ and damper diodes $D_2$ and $D_3$ being connected at the cathode of diode $D'_1$, damper action is no longer available to flyback transformer retrace resonant circuit 32 by diodes $D_2$ and $D_3$. A separate damper diode $D_7$ is coupled across capacitor $C_{RT}$ and provides to the flyback transformer retrace resonant circuit the required damper action at the end of retrace. Diode $D_7$ thereby further isolates retrace resonant circuits 32 and 33 from one another near the end of their respective retrace intervals.

Diode $D'_1$ of FIGURE 2 conducts lower amplitude flyback transformer current during horizontal trace than does the corresponding diode $D_1$ of FIGURE 1.

Because diode $D'_1$ is poled to conduct current from flyback transformer winding $W_1$ to deflection retrace resonant circuit 33, the B + supply source at terminal 21 provides startup current to charge retrace resonant circuit 33 via the diode during the startup interval. Flyback transformer winding $W_2$ and diode $D_4$ of FIGURE 1 therefore need not be used in the circuit of FIGURE 2. In steady-state operation, the startup current path to deflection retrace resonant circuit 33 from the B + supply source is disabled by the disconnect action impressed on diode $D'_1$.

By providing a horizontal switching arrangement that includes a blocking or disconnect element, such as diode $D_1$ or $D'_1$, both flyback transformer retrace capacitor $C_{RT}$ and deflection retrace capacitance network $C_1$-$C_3$ may be ground connected and their retrace pulse voltages ground referenced. Deflection synchronization retrace pulses that are ground referenced are readily available from the deflection circuitry without requiring the flyback transformer circuitry to AC float above ground during retrace.

The resonant frequencies or retrace times of flyback transformer retrace circuit 32 and deflection retrace circuit 33 are selected to maintain separation between the two circuits and to ensure that diode $D_1$ of FIGURE 1 and diode $D'_1$ of FIGURE 2 do not conduct during retrace. In FIGURE 1, the retrace frequency of circuit 32 may be selected lower than that of circuit 33, resulting in the retrace time for retrace pulse voltage $V_4$ being longer than that of retrace pulse voltage $V_1$. In FIGURE 2, the retrace frequency of circuit 32 may be selected higher than that of circuit 33 resulting in the retrace time for retrace pulse voltage $V_4$ being shorter than that of retrace pulse voltage $V_1$.

Because the flyback transformer and deflection retrace resonant circuits are isolated from each other by diode $D_1$ or $D'_1$, only the flyback transformer retrace resonant circuit provides energy to high voltage load 30. Therefore, the primary inductance of flyback transformer $T_1$ must be sufficiently low that enough energy is stored in the transformer at the end of trace to obtain a sufficiently low equivalent high voltage source impedance under peak loading conditions.

An advantage of having both retrace resonant circuits 32 and 33 ground referenced is that the correction and energy supply current $i_2$ is injected directly into the deflection retrace circuit 33 and not via the flyback transformer circuit. No harmonics of the flyback transformer current oscillation is developed across winding $W_b$ of transformer $T_2$, thereby enhancing the isolation between the two retrace resonant circuits.

## Claims

1. A line deflection circuit comprising:

a source (B +) of direct current supply voltage;

a flyback transformer ($T_1$) including a first winding ($W_1$) direct current coupled to said source and a second winding ($W_4$) coupled to a load circuit;

a line deflection winding ($L_H$);

a first retrace capacitance ($C_1,C_2,C_3$) coupled to said line deflection winding ($L_H$);

a second retrace capacitance ($C_{RT}$) coupled to said first winding ($W_1$);

switching means ($Q_1,D_1$) coupled to said line deflection winding ($L_H$) and to said first winding ($W_1$) and operable at a line deflection rate for generating a line scanning current in said deflection winding ($L_H$), and for applying said direct current supply voltage to said first winding $(W_1)$ to store energy therein, operation of said switching means defining line trace and retrace intervals such that during said retrace intervals said line deflection winding $(L_H)$ and said first retrace capacitance $(C_1,C_2,C_3)$ form a first resonant circuit (33), to generate a first pulse voltage $(V_5)$ and said first winding $(W_1)$ and said second retrace capacitance $(C_{RT})$ form a second resonant circuit (32) to generate a second pulse voltage (25) that transfers energy stored in said first winding $(W_1)$ to said load circuit, characterized in that said switching means $(Q_1, D_1)$ decouples the two resonant circuits from each other to minimize the interaction therebetween during loading of said load circuit; and

that a transformer $(T_2)$ is coupled to said flyback transformer $(T_1)$ and to said deflection winding $(L_H)$ and has said first pulse voltage $(V_5)$ developed at a first winding (dotted terminal of $W_b$) of said transformer $(T_2)$ and said second pulse voltage (25) developed at a second winding (undotted terminal of $W_a$) of said transformer $(T_2)$ for generating a current $(i_2)$ to replenish losses sustained by said deflection winding $(L_H)$.

2. A line deflection circuit according to Claim 1 characterized in that both of the two resonant circuits (33,32) are connected to a point of common reference potential so that neither is placed in a floating condition during said retrace intervals.

3. A line deflection circuit according to Claim 2 characterized by means (34) coupled to said transformer $(T_2)$ for modulating said replenish current $(i_2)$ in accordance with a raster distortion correction signal to concurrently modulate said line scanning current.

4. A line deflection circuit according to Claim 1 characterized in that said switching means $(Q_1,D_1)$ includes a line deflection output transistor $(Q_1)$ the coupling of which to said line deflection winding $(L_H)$ or first winding (W1) is via a disconnect device $(D_1)$ that decouples the two resonant circuits (33,32) during said retrace intervals.

5. A line deflection circuit according to any of Claims 1 to 4 characterized in that said switching means includes a first damper device $(D_2,D_3)$ coupled to said first retrace capacitance $(C_1,C_2,C_3)$ and a second damper device $(D_7)$ coupled to said second retrace capacitance $(C_{RT})$.

6. A line deflection circuit according to any of Claims 1 to 5 characterized in that the amplitude of the first pulse voltage $(V_5)$ is greater than the amplitude of the said second pulse voltage (25).

7. A line deflection circuit according to Claim 2 characterized by a line deflection oscillator (31) coupled to said switching means $(Q_1)$ and having a synchronizing input coupled to said first resonant circuit (33) for synchronizing operation of said switching means $(Q_1)$ in accordance with the pulse voltage developed by said first resonant circuit (33).

8. A line deflection circuit according to Claim 1 characterized in that said transformer $(T_2)$ has a primary winding $(W_a)$ that includes said second terminal (undotted terminal) coupled to said flyback transformer $(T_1)$ and a secondary winding $(W_b)$ that includes said first terminal (dotted terminal), and further including a controllable switch $(Q_2)$ coupled to said primary winding $(W_a)$ and being conductive during said trace intervals for developing said second pulse voltage (25) at said second terminal (undotted terminal of $W_a$) during said trace intervals, said replenish current flowing in said secondary winding $(W_b)$ during said retrace intervals.

9. A line deflection circuit according to Claim 3 characterized in that said modulating means comprises a switching element $(Q_2)$ responsive to a line rate signal (from $W_3$) and to a field rate raster distortion correction signal (27).

10. A line deflection circuit according to Claim 6 characterized by a further winding $(W_2)$ of said flyback transformer $(T_1)$ coupled to said first resonant circuit (33) via a rectifier $(D_4)$ to provide start-up current thereto.

**Revendications**

1. Un circuit de déviation de ligne comprenant :
une source (B +) d'une tension d'alimentation à courant continu;
un transformateur de retour de balayage $(T_1)$ comprenant un premier enroulement $(W_1)$ relié par courant continu à ladite source et un second enroulement $(W_4)$ relié à un circuit de charge;
un enroulement de déviation de ligne $(L_H)$;
un premier condensateur de retour $(C_1,C_2,C_3)$ relié audit enroulement de déviation de ligne $(L_H)$;
un second condensateur de retour $(C_{RT})$

relié audit premier enroulement ($W_1$);

des moyens commutateurs ($Q_1,D_1$) reliés audit enroulement de déviation de ligne ($L_H$) et audit premier enroulement ($W_1$) et susceptibles de fonctionner à une fréquence de déviation de la ligne pour engendrer un courant de balayage de ligne dans ledit enroulement de déviation ($L_H$) et pour appliquer ladite tension d'alimentation en courant continu audit premier enroulement ($W_1$) pour y stocker de l'énergie, le fonctionnement desdits moyens commutateurs définissant des intervalles d'aller de ligne et de retour de façon que pendant lesdits intervalles de retour ledit enroulement de déviation de ligne ($L_H$) et ledit premier condensateur de retour ($C_1,C_2,C_3$) forment un premier circuit résonant (33), pour engendrer une première tension d'impulsion ($V_5$), et ledit premier enroulement ($W_1$) et ledit second condensateur de retour ($C_{RT}$) forment un second circuit résonant (32) pour engendrer une seconde tension d'impulsion (25) qui transfère de l'énergie stockée dans ledit premier enroulement ($W_1$) audit circuit de charge, caractérisé en ce que lesdits moyens commutateur ($Q_1,D_1$) déconnectent les deux circuits résonants l'un de l'autre pour minimiser l'interaction entre ceux-ci pendant le chargement dudit circuit de charge; et

qu'un transformateur ($T_2$) est relié audit transformateur de retour de balayage ($T_1$) et audit enroulement de déviation ($L_H$) et produit ladite première tension d'impulsion ($V_5$) à un premier enroulement (borne pourvue d'un point de $W_b$) dudit transformateur ($T_2$) et ladite seconde tension d'impulsion (25) à un second enroulement (borne pourvue d'un point de ($W_a$) dudit transformateur ($T_2$) pour engendrer un courant ($i_2$) pour compenser les pertes occasionnées par ledit enroulement de déviation ($L_H$).

2. Circuit de déviation de ligne selon la revendication 1, caractérisé en ce que tous les deux circuits résonants (33,32) sont reliés à un point d'un potentiel de référence commun de façon qu'aucun ne soit placé en une condition de flottement pendant les intervalles de retour précités.

3. Circuit de déviation de ligne selon la revendication 2, caractérisé par des moyens (34) reliés au transformateur ($T_2$) précité pour moduler le courant de compensation ($i_2$) précité conformément à un signal de correction de distorsion de trame pour moduler concurremment le courant de balayage de ligne précité.

4. Circuit de déviation de ligne selon la revendication 1, caractérisé en ce que les moyens commutateurs ($Q_1,D_2$) précités comportent un transistor de sortie de déviation de ligne ($Q_1$) dont la connexion à l'enroulement de déviation de ligne précité ($L_H$) ou au premier enroulement ($W_1$) se fait via un dispositif de déconnection ($D_1$) qui déconnecte les deux circuits résonants (33,32) pendant les intervalles de retour précités.

5. Un circuit de déviation de ligne selon l'une des revendications 1 à 4, caractérisé en ce que les moyens commutateurs précités comprennent un premier dispositif d'amortissement ($D_2,D_3$) relié au premier condensateur de retour ($C_1,C_2,C_3$) précité et un deuxième dispositif d'amortissement ($D_7$) relié au second condensateur de retour ($C_{RT}$) précité.

6. Circuit de déviation selon l'une des revendications 1 à 5, caractérisé en ce que l'amplitude de la première tension d'impulsion ($V_5$) est supérieure à celle de la seconde tension d'impulsion (25) précitée.

7. Circuit de déviation de ligne selon la revendication 2, caractérisé par un oscillateur de déviation de ligne (31) relié aux moyens commutateurs ($Q_1$) précités et ayant une entrée de synchronisation qui est reliée au premier circuit résonant (33) précité pour synchroniser le fonctionnement desdits moyens commutateurs ($Q_1$) par rapport à la tension d'impulsion engendrée par ledit premier circuit résonant (33).

8. Circuit de déviation de ligne selon la revendication 1, caractérisé en ce que le transformateur ($T_2$) précité comporte un enroulement primaire ($W_a$) qui comporte la seconde borne précitée (borne pourvue d'un point) reliée au transformateur de retour de balayage ($T_1$) précité, et un second enroulement ($W_b$) qui comprend la première borne précitée (borne pourvue d'un point), et comprenant en outre un commutateur contrôlable ($Q_2$) relié audit enroulement primaire ($W_a$) et étant conducteur pendant les intervalles d'aller précités pour produire la seconde tension d'impulsion (25) précitée à ladite seconde borne (borne sans point de $W_a$) pendant lesdits intervalles d'aller, le courant de compensation précité s'écoulant dans ledit enroulement secondaire ($W_b$) pendant lesdits intervalles de retour.

9. Un circuit de déviation de ligne selon la revendication 3, caractérisé en ce que les moyens de modulation précités comprennent un élément commutateur ($Q_2$) sensible à un signal de fréquence de ligne (de $W_3$) et à un signal de correction de distorsion de trame de fréquence de trame (27).

10. Circuit de déviation de ligne selon la revendication 6, caractérisé par un autre enroulement ($W_2$) du transformateur de retour de balayage ($T_1$) précité relié au premier circuit résonant (33) précité vie un circuit redresseur ($D_4$) pour fournir un courant de démarrage pour celui-ci.

**Patentansprüche**

1. Eine Zeilenablenkschaltung mit
einer Quelle (B+) einer Versorgungsgleichspannung;
einem Rücklauftransformator ($T_1$), der eine mit der besagten Quelle gleichstromgekoppelte erste Wicklung ($W_1$) und eine mit einer Lastschaltung gekoppelte zweite Wicklung ($W_4$) enhält;
einer Zeilenablenkwicklung ($L_H$);
einer ersten Rücklaufkapazität ($C_1$, $C_2$, $C_3$), die mit der Zeilenablenkwicklung ($L_H$) gekoppelt ist;
einer zweiten Rücklaufkapazität ($C_{RT}$), die mit der ersten Wicklung ($W_1$) gekoppelt ist;
einer Schalteinrichtung ($Q_1$, $D_1$), die mit der Zeilenablenkwicklung ($L_H$) und mit der ersten Wicklung ($W_1$) gekoppelt ist und mit einer Zeilenablenkfrequenz betreibbar ist, um einen Zeilenabtaststrom in der Ablenkwicklung ($L_H$) zu erzeugen und um die Versorgungsgleichspannung an die erste Wicklung ($W_1$) zur Speicherung von Energie in dieser Wicklung zu legen, wobei der Betrieb der Schalteinrichtung Zeilenhinlauf- und Rücklaufintervalle definiert, so daß während der Rücklaufintervalle die Zeilenablenkwicklung ($L_H$) und die erste Rücklaufkapazität ($C_1$, $C_2$, $C_3$) einen ersten Resonanzkreis (33) zur Erzeugung einer ersten Impulsspannung ($V_5$) bilden und die erste Wicklung ($W_1$) und die zweite Rücklaufkapazität ($C_{RT}$) einen zweiten Resonanzkreis (32) zur Erzeugung einer zweiten Impulsspannung (25) bilden, die Energie, welche in der ersten Wicklung ($W_1$) gespeichert ist, zur Lastschaltung überträgt, dadurch gekennzeichnet, daß die Schalteinrichtung ($Q_1$, $D_1$) die beiden Resonanzkreise voneinander entkoppelt, um die Wechselwirkung zwischen ihnen während Belastung der Lastschaltung zu minimieren, und daß ein Transformator ($T_2$) mit dem Rücklauftransformator ($T_1$) und mit der Ablenkwicklung ($L_H$) gekoppelt ist und die erste Impulsspannung ($V_5$) an einer ersten Wicklung (punktierter Anschluß von $W_b$) des besagten Transformators ($T_2$) entwickelt und die zweite Impulsspannung (25) an einer zweiten Wicklung (nichtpunktierter Anschluß von $W_a$) des besagten Transformators ($T_2$) entwickelt, um einen Strom (i2) für eine Wiederauffüllung von Verlusten, die durch die Ablenkwicklung ($L_H$) erlitten werden, zu erzeugen.

2. Eine Zeilenablenkschaltung nach Patentanspruch 1, dadurch gekennzeichnet, daß beide der zwei Resonanzkreise (33, 32) mit einem Punkt eines gemeinsamen Bezugspotentials verbunden sind, so daß keiner von ihnen während der Rücklaufintervalle in einen schwimmenden Zustand versetzt wird.

3. Eine Zeilenablenkschaltung nach Patentanspruch 2, gekennzeichnet durch eine mit dem besagten Transformator ($T_2$) gekoppelte Einrichtung (34) zum Modulieren des Wiederauffüllstroms (i2) entsprechend einem Rasterverzerrungs-Korrektursignal, um gleichzeitig den Zeilenabtaststrom zu modulieren.

4. Eine Zeilenablenkschaltung nach Patentanspruch 1, dadurch gekennzeichnet, daß die Schalteinrichtung ($Q_1$, $D_1$) einen Zeilenablenkungs-Ausgangstransistor ($Q_1$) enthält, dessen Kopplung mit der Zeilenablenkwicklung ($L_H$) oder der ersten Wicklung (W1) über ein Trennelement ($D_1$) erfolgt, das die beiden Resonanzkreise (33, 32) während der Rücklaufintervalle entkoppelt.

5. Eine Zeilenablenkschaltung nach irgendeinem der Patentansprüche 1 bis 4, dadurch gekennzeichnet, daß die Schalteinrichtung eine mit der ersten Rücklaufkapazität ($C_1$, $C_2$, $C_3$) gekoppelte erste Dämpfereinrichtung ($D_2$, $D_3$) und eine mit der zweiten Rücklaufkapazität ($C_{RT}$) gekoppelte zweite Dämpfereinrichtung ($D_7$) enthält.

6. Eine Zeilenablenkschaltung nach irgendeinem der Patentansprüche 1 bis 5, dadurch gekennzeichnet, daß die Amplitude der ersten Impulsspannung ($V_5$) größer ist als die Amplitude der zweiten Impulsspannung (25).

7. Eine Zeilenablenkschaltung nach Patentanspruch 2, gekennzeichnet durch einen Zeilenablenkoszillator (31), der mit der Schalteinrichtung ($Q_1$) gekoppelt ist und einen mit dem ersten Resonanzkreis (33) gekoppelten Synchronisiereingang hat, um den Betrieb der Schalteinrichtung ($Q_1$) entsprechend der vom ersten Resonanzkreis (33) entwickelten Impulsspannung zu synchronisieren.

8. Eine Zeilenablenkschaltung nch Patentanspruch 1, dadurch gekennzeichnet, daß der besagte Transformator ($T_2$) eine Primärwicklung ($W_a$) hat, die einen mit dem Rücklauftransformator ($T_1$) gekoppelten zweiten Anschluß (nicht-punktierter Anschluß) enthält, und eine Sekundärwicklung ($W_b$), die den besagten ersten Anschluß (punktierter Anschluß) enthält, und daß ferner ein steuerbarer Schalter ($Q_2$) enthalten ist, der mit der Primärwicklung ($W_a$) gekoppelt und während der Hinlaufintervalle leitend ist, um die zweite Impulsspannung (25) am zweiten Anschluß (nicht-punktierter Anschluß von $W_a$) während der Hinlaufintervalle zu entwickeln, und daß der Wiederauffüllstrom während der Rücklaufintervalle in der Sekundärwicklung ($W_b$) fließt.

9. Eine Zeilenablenkschaltung nach Patentanspruch 3, dadurch gekennzeichnet, daß die modulierende Einrichtung ein Schaltelement ($Q_2$) aufweist, das auf ein zeilenfrequentes Signal (von $W_3$) und auf ein teilbildfrequentes Rasterverzerrungs-Korrektursignal (27) anspricht.

10. Eine Zeilenablenkschaltung nach Patentanspruch 6, gekennzeichnet durch eine weitere Wicklung ($W_2$) des Rücklauftransformators ($T_1$), die über einen Gleichrichter ($D_4$) mit dem ersten Resonanzkreis (33) gekoppelt ist, um ihm Anlaufstrom zuzuführen.

HORIZONTAL DEFLECTION CIRCUIT 20

*Fig. 1*

HORIZONTAL DEFLECTION CIRCUIT 120

Fig. 2